(19) Europäisches Patentamt
European Patent Office
Office européen des brevets

(11) **EP 1 449 236 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(51) Int Cl.:
*H01J 61/44* *(2006.01)*   *H01J 65/04* *(2006.01)*
*C09K 11/80* *(2006.01)*   *C09K 11/78* *(2006.01)*

(21) Anmeldenummer: 03790692.2

(22) Anmeldetag: **07.08.2003**

(86) Internationale Anmeldenummer:
**PCT/DE2003/002654**

(87) Internationale Veröffentlichungsnummer:
**WO 2004/021397 (11.03.2004 Gazette 2004/11)**

(54) **DIELEKTRISCHE BARRIERE-ENTLADUNGSLAMPE MIT VERBESSERTER FARBWIEDERGABE**

DIELECTRIC BARRIER DISCHARGE LAMP WITH IMPROVED COLOUR REPRODUCTION

LAMPE A DECHARGE A BARRIERE DIELECTRIQUE A RESTITUTION DE COULEURS AMELIOREE

(84) Benannte Vertragsstaaten:
**DE FR GB IT**

(30) Priorität: **08.08.2002 DE 10236420**

(43) Veröffentlichungstag der Anmeldung:
**25.08.2004 Patentblatt 2004/35**

(73) Patentinhaber:
• **Patent-Treuhand-Gesellschaft für elektrische Glühlampen mbH**
**81543 München (DE)**
• **Arnold & Richter Cine Technik GmbH & Co. Betriebs KG**
**80799 München (DE)**

(72) Erfinder:
• **HEIDER, Jürgen**
**81547 München (DE)**
• **HIRRLE, Renate**
**86163 Augsburg (DE)**
• **MÜLLER, Ulrich**
**81479 München (DE)**
• **ZACHAU, Martin**
**82269 Geltendorf (DE)**
• **KRÄMER, Regine**
**80337 München (DE)**

(74) Vertreter: **Raiser, Franz et al**
**Osram GmbH**
**Postfach 22 16 34**
**80506 München (DE)**

(56) Entgegenhaltungen:
EP-A- 0 596 548   US-A- 5 714 835
US-A- 6 034 470   US-A1- 2002 047 620

## Beschreibung

### Technisches Gebiet

Die Erfindung geht aus von einer dielektrischen Barriere-Entladungslampe.

Der Begriff "dielektrische Barriere-Entladungslampe" umfasst dabei Quellen elektromagnetischer Strahlung auf der Basis von dielektrisch behinderten Gasentladungen.

Eine dielektrische Barriere-Entladungslampe setzt definitionsgemäß mindestens eine sogenannte dielektrisch behinderte Elektrode voraus. Eine dielektrisch behinderte Elektrode ist gegenüber dem Innern des Entladungsgefäßes bzw. vom Entladungsmedium mittels eines Dielektrikums getrennt. Dieses Dielektrikum - die dielektrische Barriere - kann beispielsweise als eine die Elektrode bedeckende dielektrische Schicht ausgeführt sein, oder sie ist durch das Entladungsgefäß der Lampe selbst gebildet, nämlich wenn die Elektrode auf der Außenseite der Wand des Entladungsgefäßes angeordnet ist. Bei Lampen, bei denen festgelegt ist, ob die Elektroden als Kathoden oder Anoden arbeiten, d.h. für den Betrieb mit unipolaren Spannungspulsen, sind zumindest die Anoden dielektrisch vom Entladungsmedium getrennt (siehe EP 0 733 266 B1).

Das ionisierbare Entladungsmedium besteht üblicherweise aus einem Edelgas, beispielsweise Xenon oder einer Gasmischung. Während der Gasentladung, die bevorzugt mittels eines in der EP 0 733 266 B1 beschriebenen gepulsten Betriebsverfahrens betrieben wird, werden sogenannte Excimere gebildet. Excimere sind angeregte Moleküle, z.B. $Xe_2^*$, die bei der Rückkehr in den in der Regel ungebundenen Grundzustand elektromagnetische Strahlung emit-tieren. Im Falle von $Xe_2^*$ liegt das Maximum der Molekülbandenstrahlung bei ca. 172 nm. Derartige UV/VUV-Strahler werden in der Prozesstechnik, beispielsweise der Oberflächenreinigung, Photolytik, Ozonerzeugung, Metallisierung, und UV-Curing verwendet. Die vorliegende Erfindung bezieht sich allerdings auf eine Variante, bei der zusätzlich eine Leuchtstoffschicht zur Konvertierung von VUV-Strahlung in Strahlung mit längeren Wellenlängen, insbesondere sichtbare Strahlung (Licht), vorgesehen ist.

### Stand der Technik

Aus der eingangs zitierten EP 0 733 266 B1 ist bereits eine Lampe für die Allgemeinbeleuchtung bekannt. Diese Lampe weist einen Dreibandenleuchtstoff mit den Komponenten Bariummagnesiumaluminat ($BaMgAl_{10}O_{17}$:Eu), Lanthanphosphat ($LaPO_4$:(Tb, Ce)) und Gadoliniumyttriumborat ((Gd, Y)$BO_3$:Eu auf. Nachteilig ist der eher mäßige Farbwiedergabewert. Ein hoher Farbwiedergabewert ist aber für die farbgetreue Reproduktion von Körperfarben von Bedeutung. Für den Einsatz in der Filmaufnahmetechnik ist zudem die Anpassung des Emissionsspektrums der Lampe auf die spektrale Empfindlichkeit des Filmmaterials wünschenswert, um möglichst auf entsprechende Objektivfilter bei den Aufnahmegeräten verzichten zu können. Diese Problematik verschärft sich noch, wenn mehrere verschiedene Lichtquellen, bspw. für Hintergrund- und Spotausleuchtung, mit unterschiedlichen Spektren verwendet werden sollen. In diesem Fall ist nämlich eine Filterung praktisch unmöglich.

Die US 6 034 470 zeigt eine flache dielektrische Barriere-Entladungslampe, die ebenfalls mit dem vorgenannten Dreibandenleuchtstoff versehen ist. Diese Flachlampe ist insbesondere für die Hinterleuchtung von Flüssigkristallbildschirmen vorgesehen.

### Darstellung der Erfindung

Die Aufgabe der vorliegenden Erfindung ist es, eine dielektrische Barriere-Entladungslampe mit verbesserter Farbwiedergabe bereit zu stellen. Ein weiterer Aspekt ist eine verbesserte Abstimmung des Spektrums der Lampe auf die spektrale Empfindlichkeit von Filmmaterial.

Diese Aufgabe wird bei einer dielektrischen Barriere-Entladungslampe mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Außerdem wird Schutz für eine Filmleuchte mit einer erfindungsgemäßen dielektrischen Barriere-Entladungslampe beansprucht, insbesondere auch in Verbindung mit einer erfindungsgemäßen dielektrischen Barriere-Entladungslampe in flacher Bauweise für diffuse Ausleuchtung.

Die Erfindung schlägt eine dielektrische Barriere-Entladungslampe mit einer Leuchtstoffmischung vor, wobei die Leuchtstoffmischung zumindest die Leuchtstoffkomponenten A: Cer aktiviertes Yttriumaluminat ($Y_3Al_5O_{12}$:Ce) und B: Europium aktiviertes Bariummagnesiumaluminat ($BaMgAl_{10}O_{17}$:Eu) umfasst. Diese Lampe zeichnet sich durch eine verbesserte Farbwiedergabe aus.

Sofern die Leuchtstoffmischung keine weiteren Leuchtstoffkomponenten umfasst, hat es sich, insbesondere für eine Farbtemperatur von ca. 7100 K, als günstig erwiesen, wenn für die Gewichtsanteile der Mischung gilt:

$$0,15 \le A \le 0,35 \text{ und } 0,65 \le B \le 0,80 \text{ und } A + B = 1,$$

$$\text{besser } 0,24 \le A \le 0,32 \text{ und } 0,68 \le B \le 0,76 \text{ und } A + B = 1.$$

Die Farbwiedergabe der Lampe kann mit einer zusätzlichen rot emittierenden Leuchtstoffkomponente C, deren Emissionsmaximum bei einer Wellenlänge von 630 $\pm$ 15 nm liegt und deren volle Halbwertsbreite größer als 50 nm ist, weiter verbessert werden.

Hiefür besonders geeignet ist die Leuchtstoffkomponente C:

Cer und Mangan aktiviertes Gadoliniummagnesiumzinkpentaborat (Gd(Zn,Mg)$B_5O_{10}$:(Ce, Mn)).

Eine weitere Verbesserung der Farbwiedergabe der Lampe kann mit einer zusätzlichen blaugrün emittierenden Leuchtstoffkomponente D, deren Emissionsmaximum bei einer Wellenlänge von 490 $\pm$ 20 nm liegt und deren volle Halbwertsbreite größer als 50 nm ist, erreicht werden.

Hiefür besonders geeignet ist die Leuchtstoffkomponente D:

Europium aktiviertes Strontiumaluminat ($Sr_4Al_{14}O_{25}$:Eu).

Untersuchungen haben gezeigt, dass es vorteilhaft ist, wenn für die Gewichtsanteile der Mischung gilt:

$$0,01 \le A \le 0,50 , \qquad 0,05 \le B \le 0,50 , \qquad 0,05 \le C \le 0,70 , \qquad 0 \le D \le 0,25 \quad \text{und}$$

$$A + B + C + D = 1.$$

Innerhalb der vorgenannten Bereiche lassen sich die in der Praxis relevanten Farbtemperaturen, insbesondere zwischen ca. 3200 K und 7100 K, für die erfindungsgemäße Lampe einstellen.

Insbesondere im Hinblick auf eine Anpassung an die spektrale Filmempfindlichkeit und für Farbtemperaturen zwischen ca. 7000 K und 5500 K ist es vorteilhaft, wenn für die Gewichtsanteile der Mischung gilt:

$$0,01 \le A \le 0,50 , \qquad 0,10 \le B \le 0,50 , \qquad 0,05 \le C \le 0,50 , \qquad 0 \le D \le 0,25 \quad \text{und}$$

$$A + B + C + D = 1.$$

Besonders vorteilhaft ist es, wenn für die Gewichtsanteile der Mischung gilt:

$$0,10 \le A \le 0,40 , \qquad 0,15 \le B \le 0,40 , \qquad 0,10 \le C \le 0,40 \qquad 0 < D \le 0,15 \quad \text{und}$$

$$A + B + C + D = 1;$$

Für eine Farbtemperatur von ca. 6800 K ist es besonders vorteilhaft, wenn für die Gewichtsanteile der Mischung gilt:

$$0,20 \le A \le 0,24 , \qquad 0,36 \le B \le 0,40 , \qquad 0,29 \le C \le 0,33 \qquad 0,07 \le D \le 0,11 \quad \text{und}$$

$$A + B + C + D = 1.$$

Für eine Farbtemperatur von ca. 5700 K ist es besonders vorteilhaft, wenn für die Gewichtsanteile der Mischung gilt:

$$0{,}23 \le A \le 0{,}28 , \quad 0{,}30 \le B \le 0{,}39 , \quad 0{,}30 \le C \le 0{,}39 \quad 0{,}03 \le D \le 0{,}10 \quad \text{und}$$

$$A + B + C + D = 1 .$$

Für eine Farbtemperatur von ca. 3200 K ist es vorteilhaft, wenn für die Gewichtsanteile der Mischung gilt:

$$0{,}14 \le A \le 0{,}20 , \quad 0{,}05 \le B \le 0{,}12 , \quad 0{,}58 \le C \le 0{,}67 \quad 0{,}05 \le D \le 0{,}15 \quad \text{und}$$

$$A + B + C + D = 1 .$$

Besonders vorteilhaft ist es, wenn für die Gewichtsanteile der Mischung gilt:

$$0{,}16 \le A \le 0{,}18 , \quad 0{,}07 \le B \le 0{,}09 , \quad 0{,}62 \le C \le 0{,}65 \quad 0{,}10 \le D \le 0{,}12 \quad \text{und}$$

$$A + B + C + D = 1 .$$

Konkrete Angaben zu den Gewichtsverhältnissen der einzelnen Komponenten einer sowohl hinsichtlich guter Farbwiedergabe als auch hinsichtlich der spektralen Empfindlichkeit von Filmmaterial verbesserten dielektrischen Barriere-Entladungslampe finden sich in der Beschreibung des Ausführungsbeispiels.

Die oben genannten Bereiche für die Gewichtsanteile der jeweiligen Komponente der Leuchtstoffmischung tragen unter anderem den in der Praxis immer auftretenden Ungenauigkeiten und Toleranzen Rechnung, bspw. den typischerweise leicht unterschiedlichen Quanteneffizienzen unterschiedlicher Leuchtstoff-Chargen aufgrund von geringen Fertigungsschwankungen etc.. Außerdem kann der Schwerpunkt der Feinabstimmung der Leuchtstoffmischung, insbesondere die Farbtemperatur, je nach konkretem Einsatz etwas anders gelagert sein. All dies ist aber mit entsprechenden Anproben einiger weniger feingestufter Mischungsvariationen innerhalb dieser Bereiche gut beherrschbar.

In einer bevorzugten Ausführung ist die erfindungsgemäße dielektrische Barriere-Entladungslampe mit Xenon gefüllt, typischerweise mit einem Fülldruck im Bereich von 50 bis 200 mbar, bevorzugt zwischen 100 und 150 mbar. Dadurch erzeugt die dielektrisch behinderte Entladung eine Xenon-Excimerbandenstrahlung mit einen Maximum bei ca. 172 nm, die die Leuchtstoffe anregt. Sowohl bei der Auswahl der Leuchtstoffkomponenten als auch für deren Mischungsverhältnisse ist die Quanteneffizienz der Leuchtstoffe für diese anregende Strahlung zu berücksichtigen, um eine möglichst hohe Lichtausbeute zu gewährleisten. Ein weiterer Aspekt ist die Maintenance der Leuchtstoffkomponenten bei dauerhafter Anregung mit dieser Strahlung. Dabei wird für jede Leuchtstoffkomponente eine möglichst geringe Abnahme der Intensität der konvertierten Strahlung während der Lampenlebensdauer angestrebt.

**Kurze Beschreibung der Zeichnungen**

Im Folgenden soll die Erfindung anhand einiger Ausführungsbeispiele näher erläutert werden. Es zeigen:

Fig. 1a    eine schematische Draufsicht einer erfindungsgemäßen dielektrischen Barriere-Entladungslampe,

Fig. 1b    eine schematische Seitenansicht der Lampe aus Figur 1a,

Fig. 2    die gemessene, normierte spektrale Intensitätsverteilung der erfindungsgemäßen Lampe mit einer ersten Leuchtstoffmischung und der Farbtemperatur 7100 K,

Fig. 3    die gemessene, normierte spektrale Intensitätsverteilung der erfindungsgemäßen Lampe mit einer anderen Leuchtstoffmischung und der Farbtemperatur 6800 K,

Fig. 4    die gemessene, normierte spektrale Intensitätsverteilung der erfindungsgemäßen Lampe mit einer weiteren Leuchtstoffmischung und der Farbtemperatur 5700 K,

Fig. 5    die prinzipiellen Verhältnisse der Elektrodenstruktur für eine vorzugsweise mit unipolaren Spannungspulsen zu betreibende erfindungsgemäßen Flachlampe mit einer Diagonale von 6,8",

Fig. 6       die gemessene, normierte spektrale Intensitätsverteilung der erfindungsgemäßen Lampe mit einer weiteren Leuchtstoffmischung und der Farbtemperatur 3200 K.

**Bevorzugte Ausführung der Erfindung**

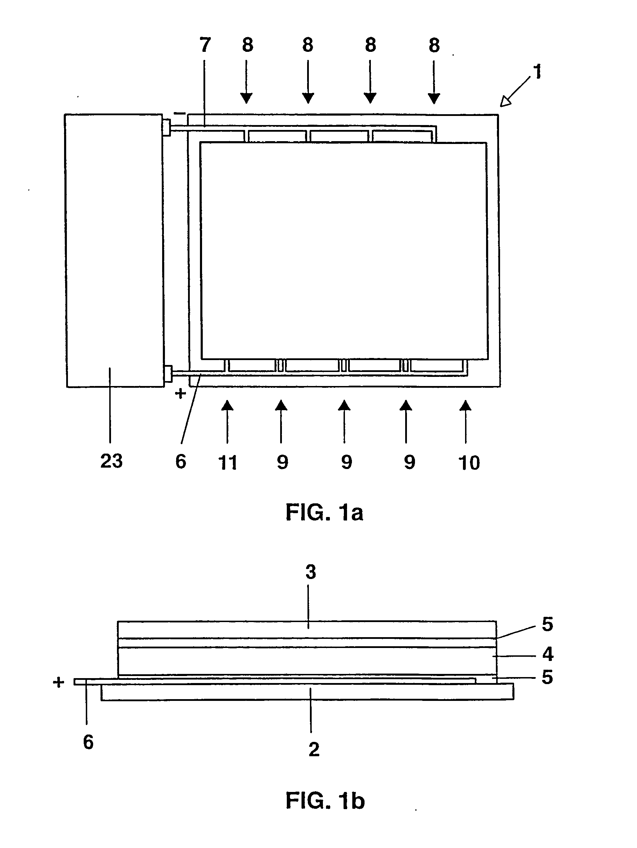

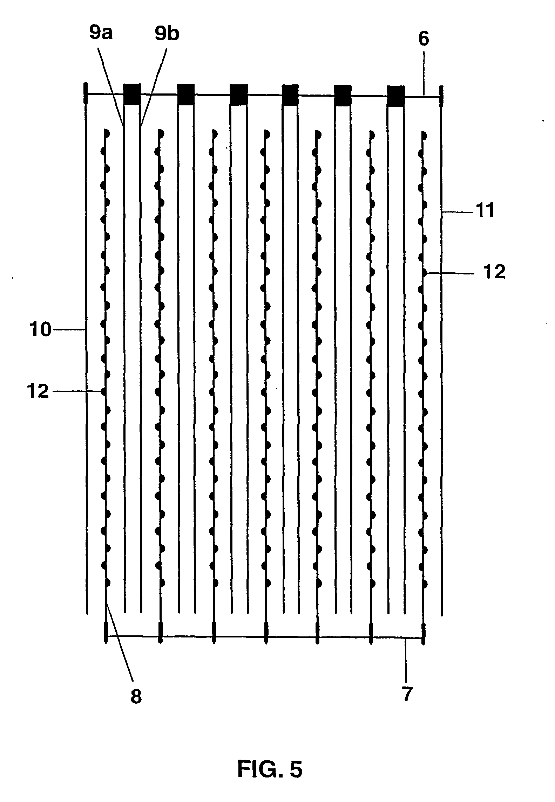

In den Figuren 1a, 1b ist eine schematische Draufsicht bzw. Seitenansicht einer erfindungsgemäßen dielektrischen Barriere-Entladungslampe 1 schematisch dargestellt. Dabei handelt es sich um eine flache dielektrischen Barriere-Entladungslampe für die Beleuchtung bei Filmaufnahmen. Lediglich aus darstellerischen Gründen ist eine Lampe mit relativ wenigen Elektrodenstreifen und folglich relativ geringer Lampendiagonale gezeigt. Dieser Aspekt wird weiter unten im Zusammenhang mit der Figur 5 näher erläutert. Von ihrem prinzipiellen mechanischen und elektrischen Aufbau entspricht diese Flachlampe jedenfalls im wesentlichen jener Lampe, die in der bereits zitierten US 6 034 470 offenbart ist. Der Hauptunterschied besteht in der Leuchtstoffschicht. Bevor hierauf im Detail eingegangen wird soll anhand der Figuren 1a, 1b zunächst der grobe Aufbau der erfindungsgemäßen Lampe 1 skizziert werden.

Die Flachlampe 1 besteht aus einem flachen Entladungsgefäß mit rechteckiger Grundfläche und einem Elektrodensatz, der innerhalb des Entladungsgefäßes angeordnet ist. Das Entladungsgefäß besteht seinerseits aus einer Rückplatte 2, einer Vorderplatte 3 und einem Rahmen 4, jeweils aus Glas gefertigt. Rückplatte 2 und Vorderplatte 3 sind jeweils mittels Glaslot 5 mit dem Rahmen 4 gasdicht verbunden derart, dass das Innere des Entladungsgefäßes quaderförmig ausgebildet ist. Das Innere des Entladungsgefäßes ist mit Xenon mit einem Druck von ca. 130 mbar gefüllt. Die Rückplatte 2 ist größer als die Vorderplatte 3 derart, dass das Entladungsgefäß einen umlaufenden freistehenden Rand aufweist. Auf diesem Rand sind zwei leiterbahnähnliche Zuleitungen 6, 7 für den Elektrodensatz aufgebracht.

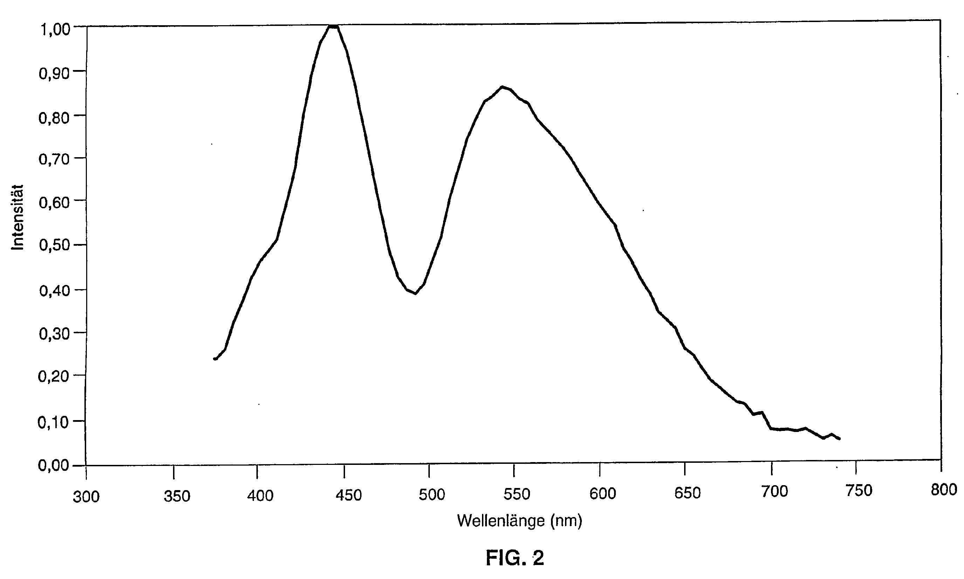

Die Innenfläche der Vorderplatte 3 ist mit einem Leuchtstoffgemisch beschichtet (in der Darstellung nicht sichtbar), welches die von der Entladung erzeugte UV/VUV-Strahlung in sichtbares weißes Licht konvertiert. Es handelt sich dabei um die beiden Leuchtstoffkomponenten $Y_3Al_5O_{12}$:Ce und $BaMgAl_{10}O_{17}$:Eu mit den zugehörigen Gewichtsanteilen 28% und 72%. Die Lampe hat eine Farbtemperatur von 7100 K. Der allgemeine Farbwiedergabeindex $R_a$ ist 76. In Figur 2 ist die gemessene, normierte spektrale Intensitätsverteilung (X-Achse: Wellenlänge in nm; Y-Achse: auf 1 normierte Intensität) dieser Lampe dargestellt.

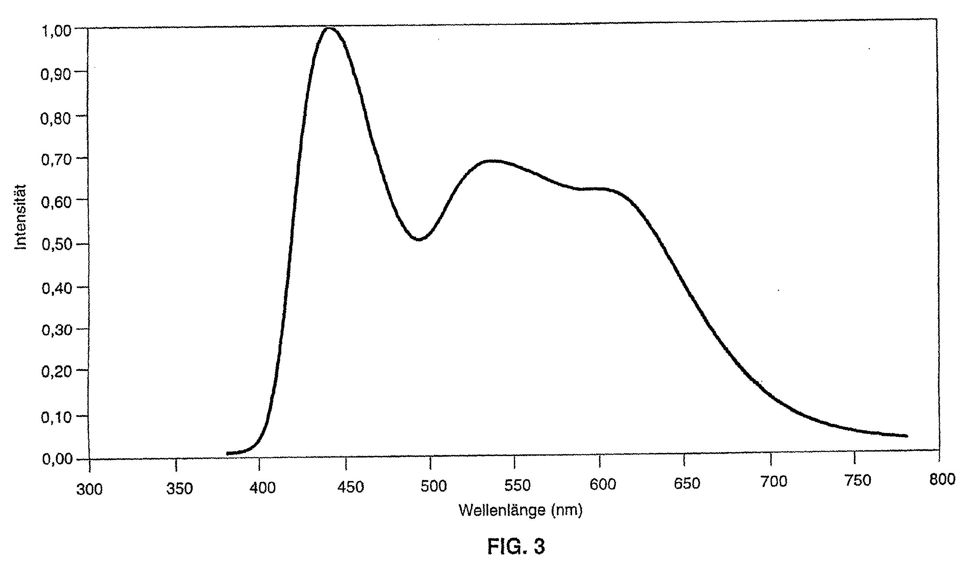

Die Figur 3 zeigt die gemessene, normierte spektrale Intensitätsverteilung einer modifizierten Lampe mit den vier Leuchtstoffkomponenten A:= $Y_3Al_5O_{12}$:Ce, B:= $BaMgAl_{10}O_{17}$:Eu, C:= Gd(Zn, Mg)$B_5O_{10}$:(Ce, Mn) und D:= $Sr_4Al_{14}O_{25}$:Eu mit den zugehörigen Gewichtsanteilen 22%, 38%, 31% und 9%. Die Lampe mit dieser Leuchtstoffmischung zeichnet sich durch einen allgemeinen Farbwiedergabeindex von $R_a$ = 90 und einen Rotwiedergabeindex von $R_9$ = 75 aus. Die Farbtemperatur beträgt 6800 K. Darüber hinaus ist das Lampenspektrum auch an die spektrale Empfindlichkeitskurve von Filmmaterial angepasst.

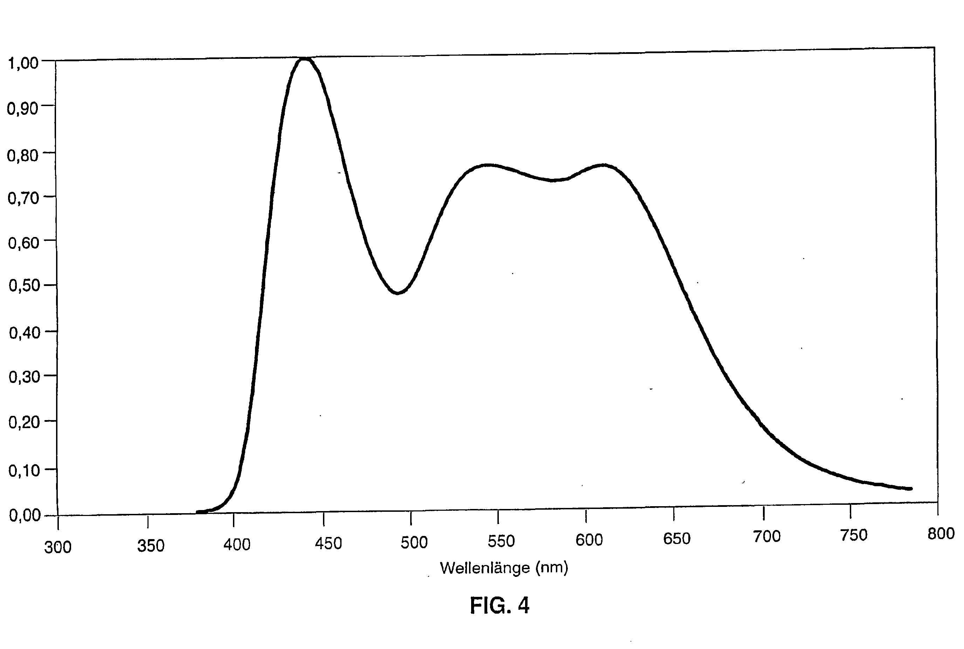

Figur 4 zeigt die gemessene, normierte spektrale Intensitätsverteilung einer Variante, bei der lediglich die Mischungsverhältnisse der vorgenannten Leuchtstoffkomponenten A, B, C, D verändert wurden, nämlich auf 25%, 33%, 37% bzw. 5%. Das Spektrum ist noch besser an die spektrale Empfindlichkeitskurve von Filmmaterial angepasst. Der allgemeine Farbwiedergabeindex $R_a$ und der Rotwiedergabeindex $R_9$ betragen ca. 92 bzw. 82. Die Farbtemperatur liegt bei ca. 5700 K.

Eine weitere Verbesserung wurde durch die geringfügig veränderte Mischung A : B : C : D = 0,26 : 0,32 : 0,37 : 0,05 erzielt (nicht dargestellt).

Aus Gründen der besseren Darstellbarkeit ist für die in Fig. 1a, 1b dargestellte Lampe ein repräsentatives Layout eines Elektrodensatz für eine Lampendiagonale von 6,8" in Fig. 5 schematisch dargestellt. Bei einer Lampe mit einer größeren Diagonale ändert sich am prinzipiellen Layout des Elektrodensatz nichts, es sind lediglich entsprechend mehr und längere Elektrodenstreifen erforderlich. Der Elektrodensatz besteht aus einer leiterbahnähnlichen Struktur mit streifenartigen metallischen Kathoden 8 und Anoden 9, 10, 11, die abwechselnd und parallel auf der Innenfläche der Rückplatte 2 angeordnet sind. Die Kathodenstreifen 8 weisen gezielt räumlich bevorzugte Ansatzpunkte für die im gepulsten Betrieb entstehenden Einzelentladungen auf (siehe hierzu die bereits zitierte EP 0 733 266 B1), die durch nasenartige, dem jeweils benachbarten Anodenstreifen zugewandte Fortsätze 12 realisiert sind. Sie bewirken lokal begrenzte Verstärkungen des elektrischen Feldes und folglich, dass die deltaförmigen Einzelentladungen (nicht dargestellt) ausschließlich an diesen Stellen 12 zünden. Mit Ausnahme der beiden äußeren Anoden 10, 11 weisen die übrigen Anoden 9 eine Doppelstruktur 9a, 9b auf. Sämtliche Anoden 9-11 sind mit einer dielektrischen Schicht aus Glaslot (nicht dargestellt) bedeckt. Die Anoden 9-11 und Kathoden 8 sind jeweils an ihrem einen Ende verlängert und auf der Rückplatte 2 aus dem Innern des Entladungsgefäßes beidseitig nach außen geführt derart, dass die zugehörigen anodischen bzw. kathodischen Durchführungen auf zueinander entgegengesetzten Seiten der Rückplatte 2 angeordnet sind. Auf dem Rand der Rückplatte 2 gehen die Elektrodenstreifen 8-11 jeweils in die bereits erwähnten kathodenseitige 6 bzw. anodenseitige 7 Zuleitung über. Die Zuleitungen 6, 7 dienen als Kontakte für die Verbindung mit vorzugsweise einer elektrischen Impulsspannungsquelle 13. Für eine (nicht dargestellte) Flachlampe mit z.B. 15" Diagonale ist ein (nicht dargestellter) Elektrodensatz mit zwölf Kathodenstreifen und elf Doppelanodenstreifen sowie zwei äußeren Einfachanoden vorgesehen. Jeder Anodenstreifen weist entlang jeder der beiden Längsseiten jeweils dreizehn Fortsätze für die Zündung der Einzelentladungen auf.

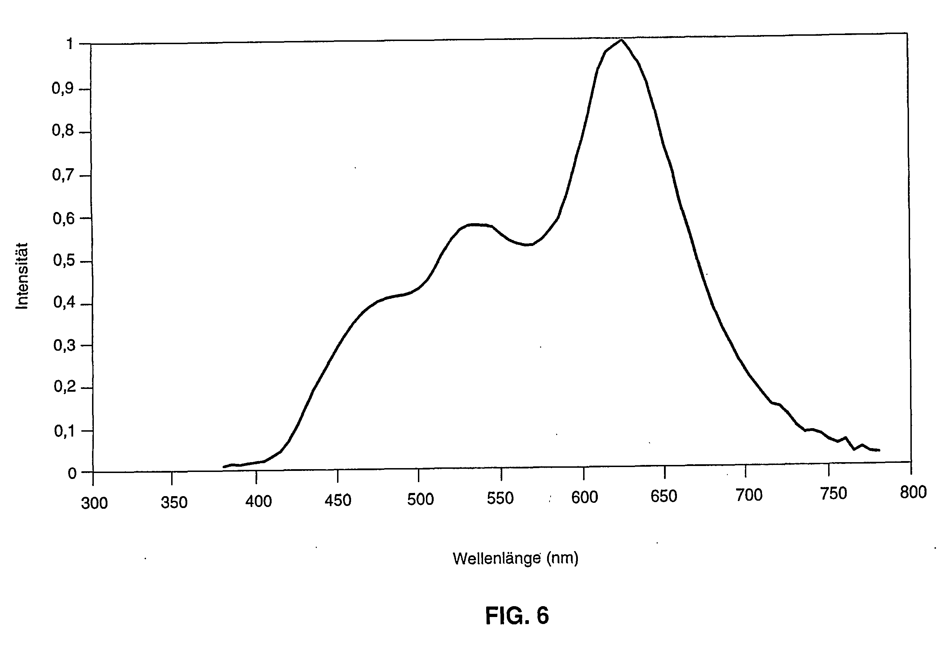

In Figur 6 ist die gemessene, normierte spektrale Intensitätsverteilung (X-Achse: Wellenlänge in nm; Y-Achse: auf 1 normierte Intensität) einer weiteren Variante dargestellt, die für eine Farbtemperatur von ca. 3200 K ausgelegt ist. Der Farbort im Farbnormdiagramm nach CIE hat die Koordinaten x = 0,421 und y = 0,394. Zu diesem Zweck betragen die Gewichtsanteile der vier Leuchtstoffkomponenten A : B : C : D = 17,4 : 8,6 : 63,2 : 10,8, wobei A:= $Y_3Al_5O_{12}$:Ce, B:= $BaMgAl_{10}O_{17}$:Eu, C:= $Gd(Zn, Mg)B_5O_{10}$:(Ce, Mn) und D:= $Sr_4Al_{14}O_{25}$:Eu. Das Spektrum ist gut an die spektrale Empfindlichkeitskurve des für diese Farbtemperatur ausgelegten Filmmaterials angepasst und zeichnet sich darüber hinaus durch den allgemeinen Farbwiedergabeindex $R_a$ = 91 und den Rotwiedergabeindex $R_9$ = 92 aus.

Obwohl die Erfindung vorstehend am Beispiel einer flachen dielektrischen Barriere-Entladungslampe im Detail erläutert wurde, ist sie nicht auf diese Lampenform beschränkt. Vielmehr ergeben sich ihre vorteilhaften Wirkungen auch bei Lampen mit anderen Gefäßformen, z.B. bei rohrförmigen Lampen. Im letzteren Fall besteht der Elektrodensatz aus zwei oder mehr länglichen Elektroden, die parallel zur Lampenlängsachse auf der Wand des rohrförmigen Entladungsgefäßes angeordnet sind.

Für eine Filmleuchte (nicht dargestellt) ist zumindest eine flache dielektrische Barriere-Entladungslampe der vorstehend beschriebenen Art in ein flaches Leuchtengehäuse, das ist im einfachsten Fall ein Rahmen, in den die flache Lampe(n) eingehängt ist (sind), eingebaut. Das Leuchtengehäuse ist auf einem vorzugsweise in der Höhe verstellbaren Fuß angeordnet. Das für den Betrieb der flachen dielektrischen Barriere-Entladungslampe benötigte elektrische Versorgungsgerät kann innerhalb der Filmleuchte angeordnet sein oder auch außerhalb.

**Patentansprüche**

1. Dielektrische Barriere-Entladungslampe (1) mit,

   - einem Entladungsgefäß, dessen Wand ein Entladungsmedium umschließt,
   - einem Elektrodensatz (8-11) zur Erzeugung dielektrisch behinderter Entladungen in dem Entladungsmedium, wobei zumindest ein Teil des Elektrodensatzes (8-11) dielektrisch behindert ist,
   - einer Leuchtstoffmischung, die zumindest auf einem Teil der Wand des Entladungsgefäßes aufgebracht ist,

   **dadurch gekennzeichnet, dass** die Leuchtstoffmischung zumindest die Leuchtstoffkomponenten A und B umfasst, mit

   • A: $Y_3Al_5O_{12}$:Ce,
   • B: $BaMgAl_{10}O_{17}$:Eu,

2. Dielektrische Barriere-Entladungslampe nach Anspruch 1, wobei für die Gewichtsanteile der Mischung gilt:

$$0,15 \leq A \leq 0,35 \text{ und } 0,65 \leq B \leq 0,80 \text{ und } A + B = 1.$$

3. Dielektrische Barriere-Entladungslampe nach Anspruch 1 oder 2 mit einer zusätzlichen rot emittierenden Leuchtstoffkomponente C, deren Emissionsmaximum bei einer Wellenlänge von 630 $\pm$ 15 nm liegt und deren volle Halbwertsbreite größer als 50 nm ist.

4. Dielektrische Barriere-Entladungslampe nach Anspruch 3, wobei die Leuchtstoffkomponente C

   • $Gd(Zn,M_5)B_5O_{10}$:(Ce, Mn)
   ist.

5. Dielektrische Barriere-Entladungslampe nach einem der vorstehenden Ansprüche, außer Anspruch 2, mit einer zusätzlichen blaugrün emittierenden Leuchtstoffkomponente D, deren Emissionsmaximum bei einer Wellenlänge von 490 $\pm$ 20 nm liegt und deren volle Halbwertsbreite größer als 50 nm ist.

6. Dielektrische Barriere-Entladungslampe nach Anspruch 5, wobei die Leuchtstoffkomponente D

• $Sr_4Al_{14}O_{25}$:Eu

ist.

7. Dielektrische Barriere-Entladungslampe nach einem der Ansprüche 3 bis 6, aber nicht in Verbindung mit Anspruch 2, wobei für die Gewichtsanteile der Mischung gilt:

$$0,01 \leq A \leq 0,50, \quad 0,05 \leq B \leq 0,50, \quad 0,05 \leq C \leq 0,70, \quad 0 \leq D \leq 0,25 \quad \text{und}$$

$$A + B + C + D = 1.$$

8. Dielektrische Barriere-Entladungslampe nach einem der Ansprüche 3 bis 6, aber nicht in Verbindung mit Anspruch 2, wobei für die Gewichtsanteile der Mischung gilt:

$$0,01 \leq A \leq 0,50, \quad 0,10 \leq B \leq 0,50, \quad 0,05 \leq C \leq 0,50, \quad 0 \leq D \leq 0,25 \quad \text{und}$$

$$A + B + C + D = 1.$$

9. Dielektrische Barriere-Entladungslampe nach Anspruch 5 oder 6, wobei für die Gewichtsanteile der Mischung gilt:

$$0,10 \leq A \leq 0,40, \quad 0,15 \leq B \leq 0,40, \quad 0,10 \leq C \leq 0,40 \quad 0 < D \leq 0,15 \quad \text{und}$$

$$A + B + C + D = 1.$$

10. Dielektrische Barriere-Entladungslampe nach Anspruch 5 oder 6, wobei für die Gewichtsanteile der Mischung gilt:

$$0,20 \leq A \leq 0,24, \quad 0,36 \leq B \leq 0,40, \quad 0,29 \leq C \leq 0,33 \quad 0,07 \leq D \leq 0,11 \quad \text{und}$$

$$A + B + C + D = 1.$$

11. Dielektrische Barriere-Entladungslampe nach Anspruch 5 oder 6, wobei für die Gewichtsanteile der Mischung gilt:

$$0,23 \leq A \leq 0,28, \quad 0,30 \leq B \leq 0,39, \quad 0,30 \leq C \leq 0,39 \quad 0,03 \leq D \leq 0,10 \quad \text{und}$$

$$A + B + C + D = 1.$$

12. Dielektrische Barriere-Entladungslampe nach Anspruch 5 oder 6, wobei für die Gewichtsanteile der Mischung gilt:

$$0,14 \leq A \leq 0,20, \quad 0,05 \leq B \leq 0,12, \quad 0,58 \leq C \leq 0,67 \quad 0,05 \leq D \leq 0,15 \quad \text{und}$$

$$A + B + C + D = 1.$$

13. Dielektrische Barriere-Entladungslampe nach einem der vorstehenden Ansprüche, wobei das Entladungsgefäß als Entladungsmedium Xenon enthält.

14. Dielektrische Barriere-Entladungslampe nach Anspruch 13, wobei der Fülldruck des Xenon im Bereich von 50 bis 200 mbar, bevorzugt zwischen 100 und 150 mbar liegt.

**15.** Dielektrische Barriere-Entladungslampe nach einem der vorstehenden Ansprüche, wobei das Entladungsgefäß flach geformt ist und eine Rückplatte (2) sowie eine Vorderplatte (3) für den Lichtaustritt, die zumindest teilweise lichtdurchlässig ist, umfasst.

**16.** Dielektrische Barriere-Entladungslampe nach Anspruch 15 mit einer dielektrischen Schicht zwischen zumindest einem Teil des Elektrodensatzes und dem Entladungsmedium.

**17.** Dielektrische Barriere-Entladungslampe nach einem der Ansprüche 1 bis 13, wobei das Entladungsgefäß rohrförmig ist.

**18.** Dielektrische Barriere-Entladungslampe nach einem der vorstehenden Ansprüche, wobei der Elektrodensatz aus zwei oder mehr länglichen Elektroden besteht, die auf der Wand des Entladungsgefäßes angeordnet sind.

**19.** Filmleuchte mit einer dielektrischen Barriere-Entladungslampe nach einem der vorstehenden Ansprüche.

**Claims**

**1.** Dielectric barrier discharge lamp (1) having

- a discharge vessel, the wall of which encloses a discharge medium,
- a set of electrodes (8-11) for generating dielectric barrier discharges in the discharge medium, with a dielectric barrier action in respect of at least some of the set of electrodes (8-11),
- a phosphor mixture, which is applied at least to part of the wall of the discharge vessel,

**characterized in that** the phosphor mixture comprises at least the phosphor components A and B, where

- A: $Y_3Al_5O_{12}$:Ce,
- B: $BaMgAl_{10}O_{17}$:Eu.

**2.** Dielectric barrier discharge lamp according to Claim 1, in which the following applies to the proportions by weight in the mixture:

$$0.15 \leq A \leq 0.35 \text{ and } 0.65 \leq B \leq 0.80 \text{ and } A + B = 1.$$

**3.** Dielectric barrier discharge lamp according to Claim 1 or 2 with an additional red-emitting phosphor component C, the maximum emission of which is at a wavelength of $630 \pm 15$ nm and the full width at half maximum of which is greater than 50 nm.

**4.** Dielectric barrier discharge lamp according to Claim 3, in which the phosphor component C is

- $Gd(Zn,Mg)B_5O_{10}$: (Ce, Mn).

**5.** Dielectric barrier discharge lamp according to one of the preceding claims, apart from Claim 2, with an additional blue-green-emitting phosphor component D, the maximum emission of which is at a wavelength of $490 \pm 20$ nm and the full width at half maximum of which is greater than 50 nm.

**6.** Dielectric barrier discharge lamp according to Claim 5, in which the phosphor component D is

- $Sr_4Al_{14}O_{25}$:EU.

**7.** Dielectric barrier discharge lamp according to one of Claims 3 to 6, but not in combination with Claim 2, in which the following applies to the proportions by weight in the mixture:

$0.01 \leq A \leq 0.50$, $0.05 \leq B \leq 0.50$, $0.05 \leq C \leq 0.70$, $0 \leq D \leq 0.25$ and $A + B + C + D = 1$.

8. Dielectric barrier discharge lamp according to one of Claims 3 to 6, but not in combination with Claim 2, in which the following applies to the proportions by weight in the mixture:

$0.01 \leq A \leq 0.50$, $0.10 \leq B \leq 0.50$, $0.05 \leq C \leq 0.50$, $0 \leq D \leq$

$0.25$ and $A + B + C + D = 1$.

9. Dielectric barrier discharge lamp according to Claim 5 or 6, in which the following applies to the proportions by weight in the mixture:

$0.10 \leq A \leq 0.40$, $0.15 \leq B \leq 0.40$, $0.10 \leq C \leq 0.40$, $0 < D \leq 0.15$ and $A + B + C + D = 1$.

10. Dielectric barrier discharge lamp according to Claim 5 or 6, in which the following applies to the proportions by weight in the mixture:

$0.20 \leq A \leq 0.24$, $0.36 \leq B \leq 0.40$, $0.29 \leq C \leq 0.33$, $0.07 \leq D \leq 0.11$ and $A + B + C + D = 1$.

11. Dielectric barrier discharge lamp according to Claim 5 or 6, in which the following applies to the proportions by weight in the mixture:

$0.23 \leq A \leq 0.28$, $0.30 \leq B \leq 0.39$, $0.30 \leq C \leq 0.39$, $0.03 \leq D \leq 0.10$ and $A + B + C + D = 1$.

12. Dielectric barrier discharge lamp according to Claim 5 or 6, in which the following applies to the proportions by weight in the mixture:

$0.14 \leq A \leq 0.20$, $0.05 \leq B \leq 0.12$, $0.58 \leq C \leq 0.67$, $0.05 \leq D \leq 0.15$ and $A + B + C + D = 1$.

13. Dielectric barrier discharge lamp according to one of the preceding claims, in which the discharge vessel contains xenon as discharge medium.

14. Dielectric barrier discharge lamp according to Claim 13, in which the xenon filling pressure is in the range from 50 to 200 mbar, preferably between 100 and 150 mbar.

**15.** Dielectric barrier discharge lamp according to one of the preceding claims, in which the discharge vessel is formed to be flat and comprises a back plate (2) and a front plate (3) for the light to emerge, which is at least partially transparent to light.

**16.** Dielectric barrier discharge lamp according to Claim 15, having a dielectric layer between at least part of the set of electrodes and the discharge medium.

**17.** Dielectric barrier discharge lamp according to one of Claims 1 to 13, in which the discharge vessel is tubular.

**18.** Dielectric barrier discharge lamp according to one of the preceding claims, in which the set of electrodes comprises two or more elongate electrodes which are arranged on the wall of the discharge vessel.

**19.** Film light having a dielectric barrier discharge lamp according to one of the preceding claims.


**Revendications**

**1.** Lampe ( 1 ) à décharge rendue incomplète par voie diélectrique et comprenant

- une enceinte de décharge dont la paroi entoure un milieu de décharge,
- un jeu ( 8 à 11 ) d'électrodes pour la production de décharges rendues incomplètes par voie diélectrique dans le milieu de décharge, au moins une partie du jeu ( 8 à 11 ) d'électrodes étant barrée diélectriquement,
- un mélange de substances luminescentes qui est déposé au moins sur une partie de la paroi de l'enceinte de décharge,

**caractérisée en ce que** le mélange de substances luminescentes comprend au moins les composants A et B de substances luminescentes,

- A : Y3Al5O12:Ce,
- B : BaMgAl10O17:Eu

**2.** Lampe à décharge rendue incomplète par voie diélectrique suivant la revendication 1, dans laquelle pour les proportions pondérales du mélange, on a :

$$0,15 \leq A \leq 0,35 \text{ et } 0,65 \leq B \leq 0,80 \text{ et } A + B = 1.$$

**3.** Lampe à décharge rendue incomplète par voie diélectrique suivant la revendication 1 ou 2, ayant un constituant C de substance luminescente supplémentaire émettant dans le rouge, dont le maximum d'émission se trouve à une longueur d'onde de 630 $\pm$15 nm et dont la largeur complète à mi-hauteur est supérieure à 50 nm.

**4.** Lampe à décharge rendue incomplète par voie diélectrique suivant la revendication 3, dans laquelle le constituant C de substance luminescente est

- Gd( Zn, Mg )B5O10 : ( Ce, Mn )

**5.** Lampe à décharge rendue incomplète par voie diélectrique suivant l'une des revendications précédentes, à l'exception de la revendication 2, comprenant un constituant D de substance luminescente supplémentaire émettant dans le bleu-vert, dont le maximum d'émission se trouve à une longueur d'onde de 490 $\pm$ 20 nm et dont la largeur complète à mi-hauteur est supérieure à 50 nm.

**6.** Lampe à décharge rendue incomplète par voie diélectrique suivant la revendication 5, dans laquelle le constituant D de substance luminescente est

- Sr4Al14O25:Eu

**7.** Lampe à décharge rendue incomplète par voie diélectrique suivant l'une des revendications 3 à 6, mais non en liaison avec la revendication 2, dans laquelle, pour les proportions en poids du mélange, on a :

$$0,01 \leq A \leq 0,50, \quad 0,05 \leq B \leq 0,50, \quad 0,05 \leq C \leq 0,70, \quad 0 \leq D \leq 0,25 \text{ et } A + B + C + D = 1.$$

**8.** Lampe à décharge rendue incomplète par voie diélectrique suivant l'une des revendications 3 à 6, mais non en liaison avec la revendication 2, dans laquelle, pour les proportions en poids du mélange, on a :

$$0,01 \leq A \leq 0,50, \quad 0,10 \leq B \leq 0,50, \quad 0,05 \leq C \leq 0,50, \quad 0 \leq D \leq 0,25 \text{ et } A + B + C + D = 1.$$

**9.** Lampe à décharge rendue incomplète par voie diélectrique suivant la revendication 5 ou 6, dans laquelle, pour les proportions en poids du mélange, on a :

$$0,10 \leq A \leq 0,40, \quad 0,15 \leq B \leq 0,40, \quad 0,10 \leq C \leq 0,40, \quad 0 < D \leq 0,15 \text{ et } A + B + C + D = 1.$$

**10.** Lampe à décharge rendue incomplète par voie diélectrique suivant la revendication 5 ou 6, dans laquelle, pour les proportions en poids du mélange, on a :

$$0,20 \leq A \leq 0,24, \quad 0,36 \leq B \leq 0,40, \quad 0,29 \leq C \leq 0,33, \quad 0,07 \leq D \leq 0,11 \text{ et } A + B + C + D = 1.$$

**11.** Lampe à décharge rendue incomplète par voie diélectrique suivant la revendication 5 ou 6, dans laquelle, pour les proportions en poids du mélange, on a :

$$0,23 \leq A \leq 0,28, \quad 0,30 \leq B \leq 0,39, \quad 0,30 \leq C \leq 0,39, \quad 0,03 \leq D \leq 0,10 \text{ et } A + B + C + D = 1.$$

**12.** Lampe à décharge rendue incomplète par voie diélectrique suivant la revendication 5 ou 6, dans laquelle, pour les proportions en poids du mélange, on a :

$$0,14 \leq A \leq 0,20, \quad 0,05 \leq B \leq 0,12, \quad 0,58 \leq C \leq 0,67, \quad 0,05 \leq D \leq 0,15 \text{ et } A + B + C + D = 1.$$

**13.** Lampe à décharge rendue incomplète par voie diélectrique suivant l'une des revendications précédentes, dans laquelle l'enceinte de décharge contient du xénon comme milieu de décharge.

**14.** Lampe à décharge rendue incomplète par voie diélectrique suivant la revendication 13, dans laquelle la pression de remplissage du xénon est comprise entre 50 et 200 mbar, de préférence entre 100 et 150 mbar.

**15.** Lampe à décharge rendue incomplète par voie diélectrique suivant l'une des revendications précédentes, dans laquelle l'enceinte de décharge est de forme plate et comprend une plaquette ( 2 ) arrière ainsi qu'une plaquette ( 3 ) avant de sortie de la lumière qui est transparente au moins en partie.

**16.** Lampe à décharge rendue incomplète par voie diélectrique suivant la revendication 15, comprenant une couche diélectrique entre au moins une partie du jeu d'électrodes et le milieu de décharge.

**17.** Lampe à décharge rendue incomplète par voie diélectrique suivant l'une des revendications 1 à 13, dans laquelle l'enceinte de décharge est de forme tubulaire.

**18.** Lampe à décharge rendue incomplète par voie diélectrique suivant l'une des revendications précédentes, dans laquelle le jeu d'électrodes est constitué de deux électrodes oblongues ou de plusieurs électrodes oblongues qui sont disposées sur la paroi de l'enceinte de décharge.

**19.** Luminaire pour prise de vue comprenant une lampe à décharge rendue incomplète par voie diélectrique suivant l'une des revendications précédentes.

7    8    8    8    8

1

23    6    11    9    9    9    10

**FIG. 1a**

3

5
4
5

6    2

**FIG. 1b**

FIG. 2

EP 1 449 236 B1

FIG. 3

FIG. 4

**FIG. 5**

**FIG. 6**

**EP 1 449 236 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0733266 B1
- US 6034470 A